# EUROPÄISCHE PATENTSCHRIFT

(11) **EP 4 545 714 B1**
(45) Veröffentlichungstag und Bekanntmachung des Hinweises auf die Patenterteilung: **12.08.2026**
(21) Anmeldenummer: 24196123.4
(22) Anmeldetag: 23.08.2024
(51) Int. Cl.: E02F 3/76, E02F 9/20

(54) **VERFAHREN ZUR UNTERSTÜTZUNG EINES VERTEILVORGANGS MITTELS EINES VERTEILWERKZEUGS AN EINEM NUTZFAHRZEUG**
METHOD FOR SUPPORTING A DISTRIBUTION PROCESS BY MEANS OF A DISTRIBUTION TOOL ON A UTILITY VEHICLE
PROCÉDÉ D'ASSISTANCE À UN PROCESSUS DE DISTRIBUTION AU MOYEN D'UN OUTIL DE DISTRIBUTION SUR UN VÉHICULE UTILITAIRE

(30) Priorität: 27.10.2023 DE 102023129673
(43) Veröffentlichungstag der Anmeldung: 30.04.2025
(73) Patentinhaber: Deere & Company, Moline, IL 61265 (US)
(72) Erfinder: BROCKE, STEFAN, 68163 Mannheim (DE); GANDHI, DANESH, 68163 Mannheim (DE)
(74) Vertreter: Dehnhardt, Florian Christopher

(56) Entgegenhaltungen:
- DE-A1- 102017 208 558
- DE-A1- 102020 206 120
- US-A1- 2012 318 539

## Beschreibung

Die Erfindung betrifft ein Verfahren zur Unterstützung eines Verteilvorgangs mittels eines an einem Nutzfahrzeug angebrachten Verteilwerkzeugs, bei dem das Verteilwerkzeug eine Unterkante aufweist, deren Abstand gegenüber einem befahrenen Untergrund zur Vorgabe einer während des Verteilvorgangs zu erzielenden Schichtdicke eines Verteilguts durch Veränderung einer Hubstellung des Verteilwerkzeugs anpassbar ist. Eine Vorrichtung gemäß dem Stand der Technik ist in Dokument DE 10 2017 208558 A1 offenbart.

Derartige Verfahren finden unter anderem bei als Grader oder Planierraupe ausgebildeten Straßenbaumaschinen Verwendung, bei denen eine von der momentanen Position abhängige Nachführung der Hubstellung eines Schiebeschilds dahingehend erfolgt, dass eine gewünschte Oberflächenkontur eines aus einzuebnenden Schüttgut bestehenden Straßenunterbaus erzielt wird. Die Nachführung erfolgt hierbei automatisiert auf Grundlage von seitens eines GPS-Navigationssystems bereitgestellten Positionsinformationen. Ähnliche Anwendungen sind aus dem landwirtschaftlichen Bereich bekannt, so zum Beispiel beim Anlegen eines aus zu silierendem Erntegut bestehenden Flach- oder Fahrsilos, wozu das Erntegut mittels eines an einem Frontkraftheber eines landwirtschaftlichen Traktors angebrachten Schiebeschilds schichtweise verteilt und unter dem Anpressdruck der Traktorräder oder einer gezogenen Walze verdichtet wird. Bei dem zu silierendem Erntegut handelt es sich typischerweise um Gras, Luzerne oder Mais.

Aufgrund der ausschließlich positionsbezogenen Steuerung der Hubstellung bleibt bei den bekannten Verfahren der tatsächlich erzielte Schichtaufbau bzw. Oberflächenverlauf unbeachtet. Die Kontrolle der korrekten Verteilung muss daher zusätzlich nach Sicht vorgenommen werden, diese ist jedoch gerade im unmittelbaren Umkreis des zur Durchführung des Verteilvorgangs eingesetzten Nutzfahrzeugs durch im Sichtbereich liegende Fahrzeugteile mehr oder minder eingeschränkt. Ungeachtet des jeweiligen Anwendungsbereichs stellt die Herstellung eines gleichmäßigen Schichtaufbaus bzw. Oberflächenverlaufs daher erhöhte Anforderungen an die Erfahrung des Fahrers.

Angesichts dessen ist es Aufgabe der vorliegenden Erfindung, ein Verfahren der eingangs genannten Art dahingehend anzugeben, dass bei der Durchführung eines Verteilvorgangs mittels eines an einem Nutzfahrzeug angebrachten Verteilwerkzeugs für den Fahrer die Herstellung eines gleichmäßigen Schichtaufbaus bzw. Oberflächenverlaufs des Verteilguts vereinfacht wird.

Diese Aufgabe wird durch ein Verfahren mit den Merkmalen des Patentanspruchs 1 gelöst.

Bei dem Verfahren zur Unterstützung eines Verteilvorgangs mittels eines an einem Nutzfahrzeug angebrachten Verteilwerkzeugs weist das Verteilwerkzeug eine Unterkante auf, deren Abstand gegenüber einem befahrenen Untergrund zur Vorgabe einer während des Verteilvorgangs zu erzielenden Schichtdicke eines Verteilguts durch Veränderung einer Hubstellung des Verteilwerkzeugs anpassbar ist. Von einer Kontrolleinheit wird mittels einer an dem Verteilwerkzeug angebrachten Sensoreinrichtung ein Abstand zwischen der Unterkante und einem der Unterkante bezüglich der Vorwärtsfahrtrichtung vor- oder nachgelagerten Oberflächenbereich des Verteilguts ermittelt sowie zur teil- oder vollautomatisierten Anpassung der Hubstellung des Verteilwerkzeugs entsprechend eines zu erzielenden Oberflächenverlaufs bzw. Schichtdickenverlaufs des Verteilguts zugrunde gelegt, wobei für den Fall, dass der sensorisch ermittelte Abstand einen Wert kleiner als Null aufweist und zugleich die aktuelle Fahrtrichtung des Nutzfahrzeugs mit der Lage des mittels der Sensoreinrichtung erfassten Oberflächenbereichs gegenüber der Unterkante des Verteilwerkzeugs zusammenfällt, von der Kontrolleinheit ersatzweise ein sich aus der momentanen Hubstellung des Verteilwerkzeugs ergebenden Lage der Unterkante abgeschätzter Abstand gegenüber der Oberfläche des Verteilguts zur teil- oder vollautomatisierten Anpassung der Hubstellung des Verteilwerkzeugs herangezogen wird.

Eine solche Situation ergibt sich dann, wenn das Verteilgut beim Verteilen mittels des Verteilwerkzeugs geschoben wird, sodass sich dieses entlang der Unterkante des Verteilwerkzeugs im Erfassungsbereich der Sensoreinrichtung undefiniert aufhäuft und der sensorisch ermittelte Abstand eine Aussage über den mittels des Verteilwerkzeugs hergestellten Oberflächenverlauf des Verteilguts nicht länger zulässt. Auf der der Fahrtrichtung des Nutzfahrzeugs abgewandten Seite des Verteilwerkzeugs wird der Oberfläche des Verteilguts indes ein der momentanen Lage der Unterkante entsprechender Verlauf aufgeprägt. Dieser Umstand lässt sich dazu nutzen, den Abstand zwischen der Unterkante und dem der Unterkante bezüglich der Vorwärtsfahrtrichtung vor- oder nachgelagerten Oberflächenbereich des Verteilguts mit hinreichender Genauigkeit aus der momentanen Hubstellung des Verteilwerkzeugs abzuleiten bzw. abzuschätzen.

Diese Vorgehensweise macht es überflüssig, auf beiden Seiten des Verteilwerkzeugs Sensoreinrichtungen zur redundanten Abstandsmessung vorzusehen. Mit anderen Worten genügt die Verwendung lediglich einer einzelnen Sensoreinrichtung entweder auf der Vorder- oder der Rückseite des Verladewerkzeugs, jeweils bezogen auf die Vorwärtsfahrtrichtung des Nutzfahrzeugs, was eine kostensparende Umsetzung des erfindungsgemäßen Verfahrens erlaubt. Die so gewonnenen Abstandsinformationen bilden hierbei die Grundlage für die teil- oder vollautomatisierte Anpassung der Hubstellung des Verteilwerkzeugs, mit dem Ziel, für den Fahrer die Herstellung eines gleichmäßigen Schichtaufbaus bzw. Oberflächenverlaufs des Verteilguts zu vereinfachen.

Unter dem Begriff der "automatisierten" Anpassung der Hubstellung ist vorliegend eine vom Eingreifen des Fahrers gänzlich unabhängige Betätigung einer zur Veränderung der Hubstellung des Verteilwerkezugs dienenden Stelleinrichtung zu verstehen, lediglich das Manövrieren des Nutzfahrzeugs obliegt weiterhin dem Fahrer, wohingegen im Falle einer "teilautomatisierten" Anpassung eine visuelle Ausgabe von Anweisungen an den Fahrer vorgesehen sein kann, die diesen im Sinne einer zur Erzielung gleichmäßiger Schichtdicken geeigneten manuellen Betätigung der Stelleinrichtung anleiten.

Zur Veränderung der Hubstellung des Verteilwerkzeugs dient zum Beispiel eine als hydraulisches Hubwerk ausgebildete Stelleinrichtung, die Bestandteil eines an einem landwirtschaftlichen Traktor vorgesehenen Frontkrafthebers ist, an dem wiederum ein als Schiebeschild ausgebildetes Verteilwerkzeug angebracht ist. Dieses dient insbesondere dem Anlegen eines aus zu silierendem Erntegut bestehenden Flach- oder Fahrsilos, wozu das Erntegut mittels eines an dem Frontkraftheber des landwirtschaftlichen Traktors angebrachten Schiebeschilds schichtweise verteilt und unter dem Anpressdruck der Traktorräder oder einer gezogenen Walze verdichtet wird. Bei dem zu silierendem Erntegut handelt es sich typischerweise um Gras, Luzerne oder Mais.

Die momentane Hubstellung des Frontkrafthebers und damit des Schiebeschilds lässt sich unter anderem aus dem jeweiligen Betätigungszustand des hydraulischen Hubwerks ableiten.

Daneben kann es sich bei dem Nutzfahrzeug anstelle eines landwirtschaftlichen Traktors auch ebenso gut um eine entsprechende Straßenbaumaschine, wie beispielsweise einen Grader oder eine Planierraupe handeln. Auch ist es denkbar, dass das Verteilwerkzeug nicht durch ein Schiebeschild, sondern durch eine Ladeschaufel oder dergleichen gebildet ist. Der Begriff der Unterkante ist hierbei weit auszulegen, diese muss nicht zwingend feststehend sein, sondern kann sich auch an einem rotierenden Segment einer Bodenfräse oder dergleichen befinden.

Bei der Sensoreinrichtung handelt es sich beispielsweise um einen an dem Verteilwerkzeug angebrachten Radar- oder Ultraschallsensor, der über einen CAN-Datenbus mit der Kontrolleinheit in Verbindung steht.

Vorteilhafte Weiterbildungen des erfindungsgemäßen Verfahrens gehen aus den Unteransprüchen hervor.

Vorzugsweise schließt die Kontrolleinheit für den Fall, dass der sensorisch ermittelte Abstand einen Wert größer als Null aufweist, darauf, dass sich die Unterkante des Verteilwerkzeugs außer Eingriff mit dem Verteilgut befindet, mithin das Verteilwerkzeug aufgrund von Oberflächenunebenheiten oder einer erheblichen Ungleichverteilung des Verteilguts nicht länger mit diesem in Kontakt steht. Diese Kenntnis lässt sich beispielsweise zur Ausgabe einer Fahrerinformation über eine mit der Kontrolleinheit in Verbindung stehende Nutzerschnittstelle dahingehend heranziehen, dass der Verteilvorgang nicht gleichmäßig ausgeführt wird und daher ein gezieltes Nacharbeiten durch Zufuhr von Verteilgut erforderlich ist.

Des Weiteren besteht die Möglichkeit, dass der Wert des der teil- oder vollautomatisierte Anpassung der Hubstellung des Verteilwerkzeugs jeweils zugrunde gelegten Abstands durch Verknüpfung mit seitens eines Navigationssystems bereitgestellten Informationen hinsichtlich der aktuellen Position des Nutzfahrzeugs verortet und in einer Speichereinheit entlang eines bei der Durchführung des Verteilvorgangs zurückgelegten Fahrtwegs des Nutzfahrzeugs aufgezeichnet wird. Mit anderen Worten erfolgt eine kartografische Dokumentation der (bereits) aufgebrachten Schichtdicken, was eine verbesserte Planung nachfolgender Verteilvorgänge zur Erzielung eines gewünschten Schichtaufbaus erlaubt.

Um auf die kartografische Dokumentation der Schichtdicken insbesondere für die Zwecke einer Arbeitsvorbereitung bzw. -planung zentral zugreifen zu können, kann es sich bei der Speichereinheit um eine über eine Drahtlosschnittstelle mit der Kontrolleinheit in Datenaustauschverbindung stehende Daten-Cloud handeln. Die Übertragung über die Drahtlosschnittstelle kann zum Beispiel per Streaming an einen cloudbasierten Server erfolgen.

Das erfindungsgemäße Verfahren zur Unterstützung eines Ladevorgangs wird im Folgenden anhand der beigefügten Zeichnungen näher erläutert. Hierbei sind hinsichtlich ihrer Funktion übereinstimmende bzw. vergleichbare Bauteile mit denselben Bezugszeichen gekennzeichnet. Es zeigen:
- Fig. 1: ein als Flussdiagramm dargestelltes Ausführungsbeispiel des erfindungsgemäßen Verfahrens zur Unterstützung eines Verteilvorgangs mittels eines an einem Nutzfahrzeug angebrachten Verteilwerkzeugs,
- Fig. 2: ein als landwirtschaftlicher Traktor ausgebildetes Nutzfahrzeug mit einer Anordnung zur Durchführung des in Fig. 1 wiedergegebenen erfindungsgemäßen Verfahrens, und
- Fig. 3 bis 6: verschiedene Betriebssituationen eines als Schiebeschild ausgebildeten Verteilwerkzeugs beim Anlegen eines Flachsilos.

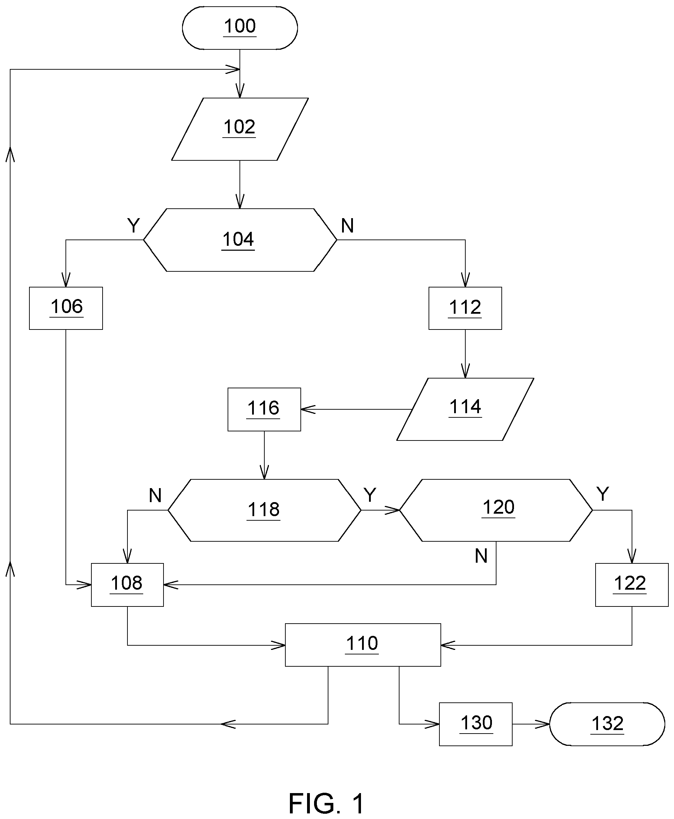

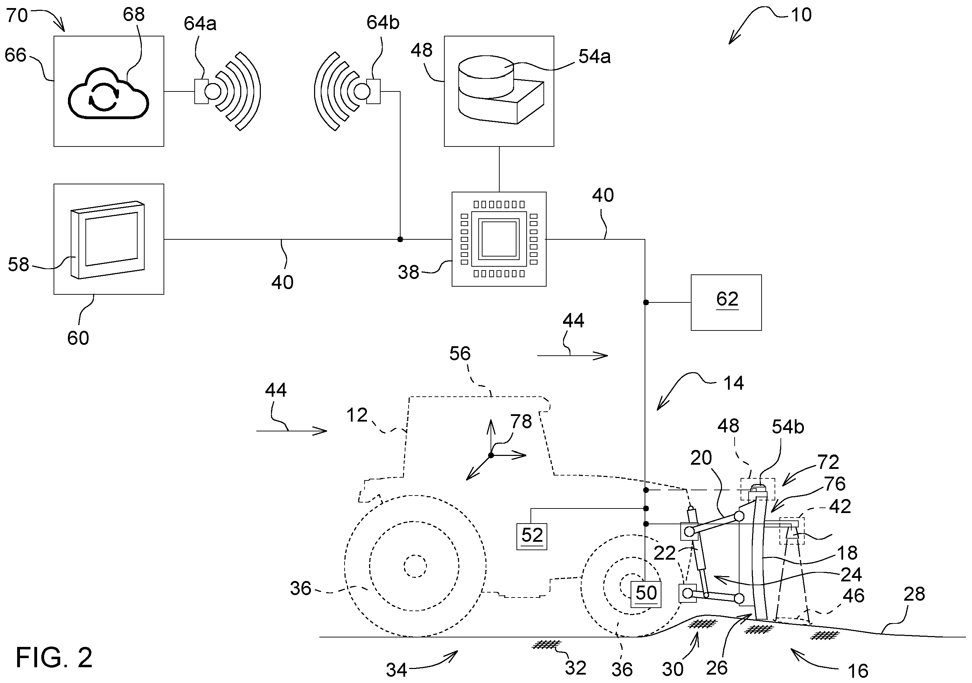

Fig. 1 zeigt ein als Flussdiagramm dargestelltes Ausführungsbeispiel des erfindungsgemäßen Verfahrens zur Unterstützung eines Verteilvorgangs mittels eines an einem Nutzfahrzeug angebrachten Verteilwerkzeugs, wobei das Verfahren nachfolgend unter Bezugnahme auf die zu dessen Durchführung vorgesehene Anordnung gemäß Fig. 2 näher beschrieben werden soll.

Ausgehend von Fig. 2 ist die Anordnung 10 Bestandteil eines als landwirtschaftlicher Traktor 12 ausgebildeten Nutzfahrzeugs 14 mit einem daran angeordneten Verteilwerkzeug 16, wobei es sich bei dem Verteilwerkzeug 16 beispielsgemäß um ein Schiebeschild 18 handelt, das als abnehmbares Zusatzgerät an einem Frontkraftheber 20 des landwirtschaftlichen Traktors 12 angebracht ist, wobei der Frontkraftheber 20 eine als hydraulisches Hubwerk 22 ausgebildete Stelleinrichtung 24 zur Veränderung der Hubstellung des Schiebeschilds 18 bzw. einer daran ausgebildeten Unterkante 26 aufweist, sodass sich der Abstand der Unterkante 26 gegenüber einem befahrenen Untergrund 28 zur Vorgabe einer während des Verteilvorgangs zu erzielenden Schichtdicke eines Verteilguts 30 durch Veränderung einer Hubstellung des Schiebeschilds 18 anpassen lässt.

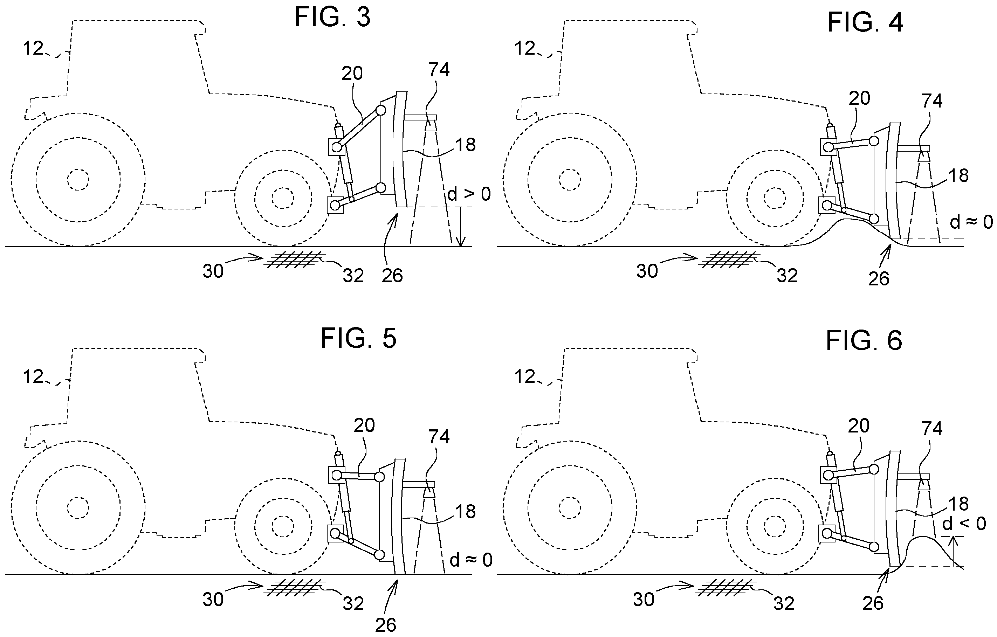

Bei dem Verteilgut 30 handelt es sich vorliegend um ein zu silierendes Erntegut 32, wobei das Erntegut 32 entsprechend den Darstellungen in Fig. 3 bis 6 mittels des Schiebeschilds 18 zum Anlegen eines Flach- oder Fahrsilos 34 schichtweise verteilt und unter dem Anpressdruck der Traktorräder 36 oder einer (nicht gezeigten) gezogenen Walze verdichtet wird. Bei dem zu silierendem Erntegut 32 handelt es sich um Gras, Luzerne oder Mais.

Des Weiteren umfasst die Anordnung 10 eine mikroprozessorgesteuerte Kontrolleinheit 38, der über einen CAN-Datenbus 40 Informationen einer Sensoreinrichtung 42 zur Erfassung eines Abstands d zwischen der Unterkante 26 und einem der Unterkante 26 bezüglich der Vorwärtsfahrtrichtung 44 vorgelagerten Oberflächenbereich 46 des Verteilguts 30, eines Navigationssystems 48 zur Bestimmung der aktuellen Position des landwirtschaftlichen Traktors 12, einer Hubwerkssteuerung 52, die aus dem jeweiligen Betätigungszustand des hydraulischen Hubwerks 22 die momentane Hubstellung des Frontkrafthebers 20 und damit des Schiebeschilds 18 ermittelt, sowie einer Fahrzeugsteuerung 50, die Angaben hinsichtlich der aktuellen Fahrtrichtung des landwirtschaftlichen Traktors 12 liefert, übermittelt werden. Eine von dem Navigationssystem 48 umfasste GPS-Empfangseinrichtung 54a, 54b ist hierbei entweder im Dachbereich 56 des landwirtschaftlichen Traktors 12 angeordnet oder aber in räumlicher Nähe zur Sensoreinrichtung 42 am Schiebeschild 18 angebracht.

Des Weiteren kommuniziert die Kontrolleinheit 38 mit einer als berührungsempfindliches Display 58 ausgebildeten Nutzerschnittstelle 60, einer internen Speichereinheit 62 sowie über eine Drahtlosschnittstelle 62a, 62b mit einer externen Speichereinheit 66 in Form einer Daten-Cloud 68. Genauer gesagt erfolgt die Übertragung über die Drahtlosschnittstelle 62a, 62b per Streaming an einen cloudbasierten Server 70.

Bei der Sensoreinrichtung 42 handelt es sich um einen in einem oberen Bereich 72 des Schiebeschilds 18 angebrachten Radar- oder Ultraschallsensor 74. Bezogen auf die Vorwärtsfahrtrichtung 44 des landwirtschaftlichen Traktors 12 befindet sich dieser im vorliegenden Fall auf einer Vorderseite 76 des Schiebeschilds 18. Es sei jedoch erwähnt, dass abweichend davon auch eine Anbringung auf einer Rückseite des Schiebeschilds 18 vorgesehen sein kann, um einen entsprechenden Abstand zwischen der Unterkante 26 des Schiebeschilds 18 und einem der Unterkante 26 bezüglich der Vorwärtsfahrtrichtung 44 nachgelagerten Oberflächenbereich des Verteilguts 30 zu ermitteln. Insofern lässt sich der Anbringungsort der Sensoreinrichtung 42 den baulichen Gegebenheiten des jeweiligen Verteilwerkzeugs 16 entsprechend auswählen.

Das von der Kontrolleinheit 38 durchgeführte und als entsprechender Programmcode in der internen Speichereinheit 62 abgelegte Verfahren wird in einem Startschritt 100 vom Bediener durch Aufrufen der entsprechenden Assistenzfunktion über die Nutzerschnittstelle 60 gestartet, woraufhin in einem ersten Hauptschritt 102 von der Kontrolleinheit 38 mittels der an dem Schiebschild 18 angebrachten Sensoreinrichtung 42 der Abstand d zwischen der Unterkante 26 und dem der Unterkante 26 bezüglich der Vorwärtsfahrtrichtung 44 vorgelagerten Oberflächenbereich 46 des Verteilguts 30 ermittelt wird. Zugleich erfolgt im ersten Hauptschritt 102 eine Abschätzung eines Abstands d' gegenüber der Oberfläche des Verteilguts 30 aus der sich aus der momentanen Hubstellung des Schiebeschilds 18 ergebenden Lage der Unterkante 26.

In einem nachfolgenden zweiten Hauptschritt 104 wird seitens der Kontrolleinheit 38 überprüft, ob der im ersten Hauptschritt 102 sensorisch ermittelte Abstand d einen Wert größer als Null aufweist. Trifft dies zu, so wird in einem dritten Hauptschritt 106 von der Kontrolleinheit 38 darauf geschlossen, dass sich die Unterkante 26 des Schiebeschilds 18 außer Eingriff mit dem Verteilgut 30 befindet, mithin das Schiebeschild 18 aufgrund von Oberflächenunebenheiten oder einer erheblichen Ungleichverteilung des Verteilguts 30 nicht länger mit diesem in Kontakt steht. Diese Betriebssituation des landwirtschaftlichen Traktors 12 ist in Fig. 3 wiedergegeben. In einem solchen Fall wird der im erstem Hauptschritt 102 sensorisch ermittelte Abstand d in einem vierten Hauptschritt 108 zur Weitergabe an einen fünften Hauptschritt 110 ausgewählt, in dem dieser die Grundlage für eine teil- oder vollautomatisierte Anpassung der Hubstellung des Schiebeschilds 18 entsprechend eines zu erzielenden Oberflächenverlaufs bzw. Schichtdickenverlaufs des Verteilguts 30 bildet. Gleichzeitig erfolgt die Ausgabe einer Fahrerinformation über das Display 58 der mit der Kontrolleinheit 38 in Verbindung stehenden Nutzerschnittstelle 60 dahingehend, dass der Verteilvorgang aufgrund des fehlenden Kontakts zwischen der Unterkante 26 des Schiebeschilds 18 und dem Verteilgut 30 nicht gleichmäßig ausgeführt wird und daher ein gezieltes Nacharbeiten durch Zufuhr von Verteilgut 30 erforderlich ist.

Anschließend kehrt das Verfahren zum ersten Hauptschritt 102 zurück, um erneut durchlaufen zu werden.

Unter dem Begriff der "automatisierten" Anpassung der Hubstellung ist vorliegend eine vom Eingreifen des Fahrers gänzlich unabhängige Betätigung der durch das hydraulische Hubwerk 22 gebildeten Stelleinrichtung 24 zu verstehen, lediglich das Manövrieren des landwirtschaftlichen Traktors 12 obliegt weiterhin dem Fahrer, wohingegen im Falle einer "teilautomatisierten" Anpassung über das Display 58 der Nutzerschnittstelle 60 eine visuelle Ausgabe von Anweisungen an den Fahrer vorgesehen ist, die diesen im Sinne einer zur Erzielung gleichmäßiger Schichtdicken geeigneten manuellen Betätigung des hydraulischen Hubwerks 22 anleiten.

Ergibt sich im zweiten Hauptschritt 104 hingegen, dass der Wert des sensorisch ermittelten Abstands d nicht größer als Null ist, so wird in einem sechsten Hauptschritt 112 von der Kontrolleinheit 38 darauf geschlossen, dass sich die Unterkante 26 des Schiebeschilds 18 in Eingriff mit dem Verteilgut 30 befindet. Hierauf werden in einem siebten Hauptschritt 114 der sensorisch ermittelte Abstand d wie auch der abgeschätzte Abstand d' zusammen mit von der Fahrzeugsteuerung 50 bereitgestellten Informationen hinsichtlich der aktuellen Fahrtrichtung des landwirtschaftlichen Traktors 12 an einen achten Hauptschritt 116 weitergegeben, in dem diese dahingehend bewertet werden, ob die aktuelle Fahrtrichtung des landwirtschaftlichen Traktors 12 mit der Lage des mittels der Sensoreinrichtung 42 erfassten Oberflächenbereichs 46 gegenüber der Unterkante 26 des Schiebeschilds 18 zusammenfällt.

Wird in einem neunten Hauptschritt 118 festgestellt, dass dies entsprechend der in Fig. 4 dargestellten Betriebssituation des landwirtschaftlichen Traktors 12 nicht zutrifft, so wird auch hier der im erstem Hauptschritt 102 sensorisch ermittelte Abstand d im vierten Hauptschritt 108 zur Weitergabe an den fünften Hauptschritt 110 ausgewählt, in dem dieser die Grundlage für die teil- oder vollautomatisierte Anpassung der Hubstellung des Schiebeschilds 18 entsprechend des zu erzielenden Oberflächenverlaufs bzw. Schichtdickenverlaufs des Verteilguts 30 bildet. Zusätzlich veranlasst die Kontrolleinheit 38 über das Display 58 der Nutzerschnittstelle 60 die Ausgabe einer Fahrerinformation dahingehend, dass sich die Unterkante 26 des Schiebeschilds 18 in Eingriff mit dem Verteilgut 30 befindet.

Beide Maßnahmen sind auch für den Fall vorgesehen, dass sich im neunten Hauptschritt 118 ergibt, dass die aktuelle Fahrtrichtung des landwirtschaftlichen Traktors 12 entgegengesetzt zur Lage des mittels der Sensoreinrichtung 42 erfassten Oberflächenbereichs 46 gegenüber der Unterkante 26 des Schiebeschilds 18 verläuft sowie in einem zehnten Hauptschritt 120 ferner erkannt wird, dass der Wert des im ersten Hauptschritt 102 sensorisch ermittelten Abstands d gleich Null ist. Dies entspricht der in Fig. 5 wiedergegebenen Betriebssituation des landwirtschaftlichen Traktors 12.

Ergibt sich im zehnten Hauptschritt 120 entsprechend der in Fig. 6 gezeigten Betriebssituation des landwirtschaftlichen Traktors 12 hingegen, dass der Wert des im ersten Hauptschritt 102 sensorisch ermittelten Abstands d kleiner als Null ist, so wird von der Kontrolleinheit 38 der im ersten Hauptschritt 102 abgeschätzte Abstand d' in einem elften Hauptschritt 122 zur Weitergabe an den fünften Hauptschritt 110 ausgewählt, um diesen anstelle des sensorisch ermittelten Abstands d und damit ersatzweise für die Zwecke der teil- oder vollautomatisierte Anpassung der Hubstellung des Schiebeschilds 18 entsprechend des zu erzielenden Oberflächenverlaufs bzw. Schichtdickenverlaufs des Verteilguts 30 heranzuziehen.

Eine solche Situation ergibt sich dann, wenn das Verteilgut 30 beim Verteilen mittels des Schiebeschilds 18 geschoben wird, sodass sich dieses entlang der Unterkante 26 des Schiebeschilds 18 im Erfassungsbereich der Sensoreinrichtung 42 undefiniert aufhäuft und der sensorisch ermittelte Abstand d eine Aussage über den mittels des Schiebeschilds 18 hergestellten Oberflächenverlauf des Verteilguts 30 nicht länger zulässt.

Auf der der Fahrtrichtung des landwirtschaftlichen Traktors 12 abgewandten Seite des Schiebeschilds 18 wird der Oberfläche des Verteilguts 30 indes ein der momentanen Lage der Unterkante 26 entsprechender Verlauf aufgeprägt. Dieser Umstand wird vorliegend dazu genutzt, den Abstand d' zwischen der Unterkante 26 und dem der Unterkante 26 bezüglich der Vorwärtsfahrtrichtung 44 vorgelagerten Oberflächenbereich 46 des Verteilguts 30 mit hinreichender Genauigkeit aus der momentanen Hubstellung des Schiebeschilds 18 abzuleiten bzw. abzuschätzen.

Optional ist ein sich an den fünften Hauptschritt 110 anschließender erster Nebenschritt 130 vorhanden, in dem der Wert des der teil- oder vollautomatisierte Anpassung der Hubstellung des Schiebeschilds 18 jeweils zugrunde gelegten Abstands d, d' von der Kontrolleinheit 38 durch Verknüpfung mit den seitens des Navigationssystems 48 bereitgestellten Informationen hinsichtlich der durch einen traktorfesten Bezugspunkt 78 gegebenen aktuellen Position des landwirtschaftlichen Traktors 12 verortet und in einem zweiten Nebenschritt 132 über die Drahtlosschnittstelle 62a, 62b per Streaming an den cloudbasierten Server 70 übertragen wird. Zu diesem Zweck nimmt die Kontrolleinheit 38 eine räumliche Transformation von der jeweiligen Anbringungsposition der GPS-Empfangseinrichtung 54a, 54b auf den traktorfesten Bezugspunkt 78 vor. Im Ergebnis erfolgt auf dieser Weise eine kartografische Dokumentation der (bereits) aufgebrachten Schichtdicken, was eine verbesserte Planung nachfolgender Verteilvorgänge zur Erzielung eines gewünschten Schichtaufbaus erlaubt.

## Patentansprüche

1. Verfahren zur Unterstützung eines Verteilvorgangs mittels eines an einem Nutzfahrzeug angebrachten Verteilwerkzeugs, bei dem das Verteilwerkzeug (16) eine Unterkante (26) aufweist, deren Abstand gegenüber einem befahrenen Untergrund (28) zur Vorgabe einer während des Verteilvorgangs zu erzielenden Schichtdicke eines Verteilguts (30) durch Veränderung einer Hubstellung des Verteilwerkzeugs (16) anpassbar ist, **dadurch gekennzeichnet, dass** von einer Kontrolleinheit (38) mittels einer an dem Verteilwerkzeug (16) angebrachten Sensoreinrichtung (42) ein Abstand (d) zwischen der Unterkante (26) und einem der Unterkante (26) bezüglich der Vorwärtsfahrtrichtung (44) vor- oder nachgelagerten Oberflächenbereich (46) des Verteilguts (30) ermittelt sowie zur teil- oder vollautomatisierten Anpassung der Hubstellung des Verteilwerkzeugs (16) entsprechend eines zu erzielenden Oberflächenverlaufs bzw. Schichtdickenverlaufs des Verteilguts (30) zugrunde gelegt wird, wobei für den Fall, dass der sensorisch ermittelte Abstand (d) einen Wert kleiner als Null aufweist und zugleich die aktuelle Fahrtrichtung des Nutzfahrzeugs (14) mit der Lage des mittels der Sensoreinrichtung (42) erfassten Oberflächenbereichs (46) gegenüber der Unterkante (26) des Verteilwerkzeugs (16) zusammenfällt, von der Kontrolleinheit (38) ersatzweise ein sich aus der momentanen Hubstellung des Verteilwerkzeugs (16) ergebenden Lage der Unterkante (26) abgeschätzter Abstand (d') gegenüber der Oberfläche des Verteilguts (30) zur teil- oder vollautomatisierten Anpassung der Hubstellung des Verteilwerkzeugs (16) herangezogen wird.

2. Verfahren nach Anspruch 1, **dadurch gekennzeichnet, dass** die Kontrolleinheit (38) für den Fall, dass der sensorisch ermittelte Abstand (d) einen Wert größer als Null aufweist, darauf schließt, dass sich die Unterkante (26) des Verteilwerkzeugs (16) außer Eingriff mit dem Verteilgut (30) befindet.

3. Verfahren nach Anspruch 1 oder 2, **dadurch gekennzeichnet, dass** der Wert des der teil- oder vollautomatisierte Anpassung der Hubstellung des Verteilwerkzeugs (16) jeweils zugrunde gelegten Abstands (d, d') durch Verknüpfung mit seitens eines Navigationssystems (48) bereitgestellten Informationen hinsichtlich der aktuellen Position des Nutzfahrzeugs (14) verortet und in einer Speichereinheit (66) entlang eines bei der Durchführung des Verteilvorgangs zurückgelegten Fahrtwegs des Nutzfahrzeugs (14) aufgezeichnet wird.

4. Verfahren nach Anspruch 3, **dadurch gekennzeichnet, dass** es sich bei der Speichereinheit (66) um eine über eine Drahtlosschnittstelle (62a, 62b) mit der Kontrolleinheit (38) in Datenaustauschverbindung stehende Daten-Cloud (68) handelt.

## Claims

1. Method for assisting a distribution process by means of a distribution tool attached to a utility vehicle, in which the distribution tool (16) has a lower edge (26), the distance of which from an underlying surface (28) being driven on, for the purpose of specifying a layer thickness of a material (30) being distributed to be achieved during the distribution process, can be adjusted by changing a lifting position of the distribution tool (16), **characterized in that** a distance (d) between the lower edge (26) and a surface region (46) of the material (30) being distributed, the surface region being upstream or downstream of the lower edge (26) with respect to the forward direction of travel (44), is determined by a control unit (38) by means of a sensor device (42) attached to the distribution tool (16) and is used as a basis for adjusting in a partially or fully automated manner the lifting position of the distribution tool (16) in accordance with a surface profile or layer thickness profile of the material (30) being distributed to be achieved, where, in the event of the distance (d) determined by sensor having a value of less than zero and at the same time the current direction of travel of the utility vehicle (14) coinciding with the position of the surface region (46) with respect to the lower edge (26) of the distribution tool (16) detected by means of the sensor device (42), alternatively a distance (d') from the surface of the material (30) being distributed, the distance being estimated from the position of the lower edge (26) resulting from the current lifting position of the distribution tool (16), is used by the control unit (38) for adjusting in a partially or fully automated manner the lifting position of the distribution tool (16).

2. Method according to Claim 1, **characterized in that** the control unit (38), in the event that the distance (d) determined by sensor has a value of greater than zero, concludes that the lower edge (26) of the distribution tool (16) is not in engagement with the material (30) being distributed.

3. Method according to Claim 1 or 2, **characterized in that** the value for the distance (d, d') respectively used as a basis for adjusting in a partially or fully automated manner the lifting position of the distribution tool (16) is located by combination with information provided by a navigation system (48) with respect to the current position of the utility vehicle (14) and is recorded in a memory unit (66) along a route travelled by the utility vehicle (14) while carrying out the distribution process.

4. Method according to Claim 3, **characterized in that** the memory unit (66) is a data cloud (68) which forms a data-exchange connection with the control unit (38) via a wireless interface (62a, 62b).

## Revendications

1. Procédé d'assistance à un processus de distribution au moyen d'un outil de distribution monté sur un véhicule utilitaire, dans lequel l'outil de distribution (16) présente un bord inférieur (26) dont la distance par rapport à une surface routière (28) est adaptable en modifiant une position de levage de l'outil de distribution (16) afin de prédéfinir une épaisseur de couche d'un matériau de distribution (30) à atteindre pendant le processus de distribution, **caractérisé en ce qu'**une distance (d) entre le bord inférieur (26) et une zone de surface (46) du matériau de distribution (30) qui est située en amont ou en aval du bord inférieur (26) par rapport au sens de déplacement vers l'avant (44) est déterminée par une unité de contrôle (38) au moyen d'un dispositif capteur (42) monté sur l'outil de distribution (16), et est prise pour base pour l'adaptation partiellement ou totalement automatisée de la position de levage de l'outil de distribution (16) conformément à un profil de surface ou un profil d'épaisseur de couche du matériau de distribution (30) à atteindre, dans lequel, dans le cas où la distance (d) déterminée par capteur présente une valeur inférieure à zéro et où, simultanément, le sens de déplacement actuel du véhicule utilitaire (14) coïncide avec la position de la zone de surface (46) détectée au moyen du dispositif capteur (42) par rapport au bord inférieur (26) de l'outil de distribution (16), l'unité de contrôle (38) utilise à titre de remplacement une distance (d') par rapport à la surface du matériau de distribution (30), estimée à partir de la position du bord inférieur (26) résultant de la position de levage instantanée de l'outil de distribution (16), pour l'adaptation partiellement ou totalement automatisée de la position de levage de l'outil de distribution (16).

2. Procédé selon la revendication 1, **caractérisé en ce que** l'unité de contrôle (38), dans le cas où la distance (d) déterminée par capteur présente une valeur supérieure à zéro, conclut que le bord inférieur (26) de l'outil de distribution (16) se trouve hors de prise avec le matériau de distribution (30).

3. Procédé selon la revendication 1 ou 2, **caractérisé en ce que** la valeur de la distance (d, d') prise pour base respectivement pour l'adaptation partiellement ou totalement automatisée de la position de levage de l'outil de distribution (16) est localisée par liaison avec des informations fournies par un système de navigation (48) concernant la position actuelle du véhicule utilitaire (14) et est enregistrée dans une unité de stockage (66) le long d'un trajet du véhicule utilitaire (14) parcouru pendant l'exécution du processus de distribution.

4. Procédé selon la revendication 3, **caractérisé en ce que** l'unité de stockage (66) est un nuage de données (68) qui est en liaison d'échange de données avec l'unité de contrôle (38) par le biais d'une interface sans fil (62a, 62b).
